# EUROPEAN PATENT APPLICATION

(11) **EP 4 123 542 A1**
(43) Date of publication of application: **25.01.2023**
(21) Application number: 20925346.7
(22) Date of filing: 17.03.2020
(51) Int. Cl.: G06Q 20/40

(54) **ELECTRONIC PAYMENT DEVICE, SYSTEM, METHOD, AND NON-TRANSITORY COMPUTER-READABLE MEDIUM HAVING PROGRAM STORED THEREON**

(71) Applicant: NEC Corporation, 108-8001 Tokyo (JP)
(72) Inventor: KAWASE Nobuaki, Tokyo 108-8001 (JP)
(74) Representative: Betten & Resch
(86) International application number: PCT/JP2020/011789
(87) International publication number: WO 2021/186575

(57) **Abstract**

An electronic payment apparatus (1) includes a storage unit (11) that stores a user (110a) and authentication information (111 to 11n) in each of a plurality of electronic payment means in association with each other, an authentication control unit (12) that causes an authentication apparatus that stores face feature information of the user to perform face authentication for a shot image obtained by shooting the user at the time of payment, a collection unit (13) that collects value-related information relating to a payment value possessed by the user in each of the electronic payment means using the authentication information associated with the user who has succeeded in the face authentication, a determination unit (14) that determines the electronic payment means as a payment target from among the plurality of electronic payment means based on the collected value-related information, and an execution instruction unit (15) that issues an instruction to perform payment processing using the electronic payment means as the payment target.

## Description

### Technical Field

The present invention relates to an electronic payment apparatus, system, method, and program, and particularly relates to an electronic payment apparatus, system, method, and program for making electronic payment.

### Background Art

Patent Literature 1 discloses a technique relating to a biometric authentication payment system. The biometric authentication payment system presents options for a plurality of credit cards to a user, transmits biological information and a payment amount of the user to a payment system corresponding to one of the credit cards designated by the user, and makes payment based on the payment amount when authentication has been successfully performed.

Patent Literature 2 discloses a technique relating to an electronic payment system. The electronic payment system previously sets priorities, respectively, to a plurality of payment services, and performs payment processing according to the priorities.

### Citation List

### Patent Literature

Patent Literature 1
   International Patent Publication No. WO 2019/026196
Patent Literature 2
   Japanese Unexamined Patent Application Publication No. 2008-009749

### Summary of Invention

### Technical Problem

In various payment services, point provision and a return rate differs depending on circumstances, and an advantageous payment service differs for each payment. In the technique according to Patent Literature 1, a list of the options for the credit cards is only displayed, and a selection criterion by the user has not been displayed. In the technique according to Patent Literature 2, the priorities have previously been set among the plurality of payment services, and the priorities cannot flexibly be set depending on a user and a payment timing. Accordingly, the respective techniques according to Patent Literature 1 and Patent Literature 2 each have a problem that payment cannot be always made using a payment service appropriate for the user at the time of payment.

The present disclosure has been made to solve such a problem, and is directed to providing an electronic payment apparatus, system, method, and program for making payment using a payment service appropriate for a user at the time of payment.

### Solution to Problem

An electronic payment apparatus according to a first aspect of the present disclosure includes
storage means for storing a user and authentication information in each of a plurality of electronic payment means in association with each other,
authentication control means for causing an authentication apparatus that stores face feature information of the user to perform face authentication for a shot image obtained by shooting the user at the time of payment,
collection means for collecting value-related information relating to a payment value possessed by the user in each of the electronic payment means using the authentication information associated with the user who has succeeded in the face authentication,
determination means for determining the electronic payment means as a payment target from among the plurality of electronic payment means based on the collected value-related information, and
execution instruction means for issuing an instruction to perform payment processing using the electronic payment means as the payment target.

An electronic payment apparatus according to a second aspect of the present disclosure includes
storage means for storing a user, face feature information of the user, and authentication information in each of a plurality of electronic payment means in association with one another,
authentication control means for performing face authentication using the face feature information for a shot image obtained by shooting the user at the time of payment,
collection means for collecting value-related information relating to a payment value possessed by the user in each of the electronic payment means using the authentication information associated with the user who has succeeded in the face authentication,
determination means for determining the electronic payment means as a payment target from among the plurality of electronic payment means based on the collected value-related information, and
execution instruction means for issuing an instruction to perform payment processing using the electronic payment means as the payment target.

An electronic payment system according to a third aspect of the present disclosure includes
an authentication apparatus that stores face feature information of a user, and
an electronic payment apparatus,
in which the electronic payment apparatus includes
storage means for storing the user and authentication information in each of a plurality of electronic payment means in association with each other,
authentication control means for causing the authentication apparatus to perform face authentication for a shot image obtained by shooting the user at the time of payment,
collection means for collecting value-related information relating to a payment value possessed by the user in each of the electronic payment means using the authentication information associated with the user who has succeeded in the face authentication,
determination means for determining the electronic payment means as a payment target from among the plurality of electronic payment means based on the collected value-related information, and
execution instruction means for issuing an instruction to perform payment processing using the electronic payment means as the payment target.

An electronic payment method according to a fourth aspect of the present disclosure is an electronic payment method, in which a computer including storage means for storing a user and authentication information in each of a plurality of electronic payment means in association with each other
causes an authentication apparatus that stores face feature information of the user to perform face authentication for a shot image obtained by shooting the user at the time of payment,
collects value-related information relating to a payment value possessed by the user in each of the electronic payment means using the authentication information associated with the user who has succeeded in the face authentication,
determines the electronic payment means as a payment target from among the plurality of electronic payment means based on the collected value-related information, and
issues an instruction to perform payment processing using the electronic payment means as the payment target.

An electronic payment method according to a fifth aspect of the present disclosure is an electronic payment method, in which a computer including storage means for storing a user, face feature information of the user, and authentication information in each of a plurality of electronic payment means in association with one another
performs face authentication using the face feature information for a shot image obtained by shooting the user at the time of payment,
collects value-related information relating to a payment value possessed by the user in each of the electronic payment means using the authentication information associated with the user who has succeeded in the face authentication,
determines the electronic payment means as a payment target from among the plurality of electronic payment means based on the collected value-related information, and
issues an instruction to perform payment processing using the electronic payment means as the payment target.

An electronic payment program according to a sixth aspect of the present disclosure causes a computer including storage means for storing a user and authentication information in each of a plurality of electronic payment means in association with each other to perform
authentication control processing for causing an authentication apparatus that stores face feature information of the user to perform face authentication for a shot image obtained by shooting the user at the time of payment,
collection processing for collecting value-related information relating to a payment value possessed by the user in each of the electronic payment means using the authentication information associated with the user who has succeeded in the face authentication,
determination processing for determining the electronic payment means as a payment target from among the plurality of electronic payment means based on the collected value-related information, and
execution instruction processing for issuing an instruction to perform payment processing using the electronic payment means as the payment target.

An electronic payment program according to a seventh aspect of the present disclosure causes a computer including storage means for storing a user, face feature information of the user, and authentication information in each of a plurality of electronic payment means in association with one another to perform
authentication control processing for performing face authentication using the face feature information for a shot image obtained by shooting the user at the time of payment,
collection processing for collecting value-related information relating to a payment value possessed by the user in each of the electronic payment means using the authentication information associated with the user who has succeeded in the face authentication,
determination processing for determining the electronic payment means as a payment target from among the plurality of electronic payment means based on the collected value-related information, and
execution instruction processing for issuing an instruction to perform payment processing using the electronic payment means as the payment target.

### Advantageous Effects of Invention

The present disclosure makes it possible to provide an electronic payment apparatus, system, method, and program for making payment using a payment service appropriate for a user at the time of payment.

### Brief Description of Drawings

Fig. 1 is a block diagram illustrating a configuration of an electronic payment apparatus according to a first example embodiment.
Fig. 2 is a flowchart illustrating a flow of an electronic payment method according to the first example embodiment.
Fig. 3 is a block diagram illustrating a configuration of an electronic payment apparatus according to a second example embodiment.
Fig. 4 is a flowchart illustrating a flow of an electronic payment method according to the second example embodiment.
Fig. 5 is a block diagram illustrating an entire configuration of an electronic payment system according to a third example embodiment.
Fig. 6 is a block diagram illustrating a configuration of an authentication apparatus according to the third example embodiment.
Fig. 7 is a flowchart illustrating a flow of face information registration processing according to the third example embodiment.
Fig. 8 is a flowchart illustrating a flow of face authentication processing according to the third example embodiment.
Fig. 9 is a block diagram illustrating a configuration of a payment terminal according to the third example embodiment.
Fig. 10 is a block diagram illustrating a configuration of a user terminal according to the third example embodiment.
Fig. 11 is a block diagram illustrating a configuration of an electronic payment apparatus according to the third example embodiment.
Fig. 12 is a sequence diagram illustrating a flow of electronic payment processing according to the third example embodiment.
Fig. 13 is a sequence diagram illustrating a flow of electronic payment processing according to the third example embodiment.
Fig. 14 is a diagram illustrating an example of a payment means selection screen according to the third example embodiment.
Fig. 15 is a sequence diagram illustrating a flow of electronic payment processing according to a fourth example embodiment.
Fig. 16 is a flowchart illustrating a flow of electronic payment processing according to a fifth example embodiment.
Fig. 17 is a block diagram illustrating a configuration of an electronic payment apparatus according to a sixth example embodiment.
Fig. 18 is a flowchart illustrating a flow of learning processing according to the sixth example embodiment.
Fig. 19 is a sequence diagram illustrating a flow of electronic payment processing according to a seventh example embodiment.
Fig. 20 is a sequence diagram illustrating another flow of electronic payment processing according to the seventh example embodiment.
Fig. 21 is a sequence diagram illustrating another flow of electronic payment processing according to the seventh example embodiment.

### Description of Embodiments

Example embodiments of the present disclosure will be described in detail below with reference to the drawings. In the drawings, identical or corresponding elements are respectively assigned the same reference numerals, and overlapping description is omitted, as needed, to clarify description.

### <First Example Embodiment>

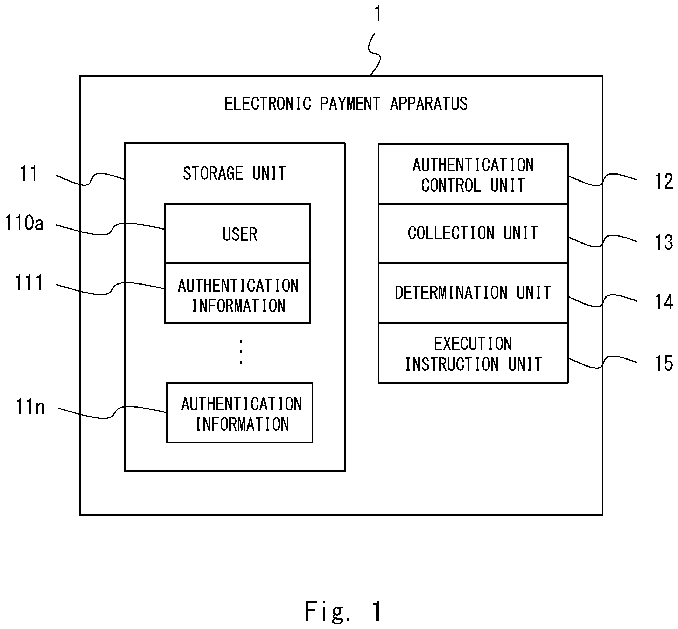

Fig. 1 is a block diagram illustrating a configuration of an electronic payment apparatus 1 according to a first example embodiment. The electronic payment apparatus 1 is an information processing apparatus that determines one electronic payment means from among a plurality of electronic payment means and issues an instruction to perform payment processing by the determined electronic payment means. The electronic payment apparatus 1 may perform payment processing inside thereof in response to a payment instruction. The electronic payment means is means for processing payment by transmitting and receiving electronic data without directly handing cash. Although examples of the electronic payment means include a credit card, a debit card, electronic money, and QR (quick response) code (registered trademark) payment, the electronic payment means is not limited to these.

The electronic payment apparatus 1 is connected to a payment system (not illustrated), a payment terminal (not illustrated), and an authentication apparatus (not illustrated) respectively corresponding to each of the plurality of electronic payment means. The electronic payment apparatus 1 may be integrated with the payment terminal.

The payment system is an information system that performs payment processing by the corresponding electronic payment means. For example, the payment system receives a payment request including authentication information such as an ID and a password and a payment amount from the payment terminal or the like via a network and makes payment (settlement) based on a payment amount requested from a balance of a user corresponding to the authentication information. The payment system may receive a payment request from the electronic payment apparatus 1.

The payment terminal is a registration terminal or the like installed in a store or the like, and is an information processing apparatus including a shooting device and a display device. The payment terminal shoots a user at the time of payment, transmits a shot image and a payment amount to the electronic payment apparatus 1, and receives and displays at least a payment result by any one of the plurality of electronic payment means.

It is assumed that an authentication apparatus previously stores face feature information of the user. The authentication apparatus receives input of a face image or face feature information from the electronic payment apparatus 1, performs collation with the face feature information previously stored, determines a match or a mis-match therebetween, and outputs a determination result to the electronic payment apparatus 1. The determination result is a success in face authentication in the case of the match, and the determination result is a failure in face authentication in the case of the mis-match.

The electronic payment apparatus 1 includes a storage unit 11, an authentication control unit 12, a collection unit 13, a determination unit 14, and an execution instruction unit 15. The storage unit 11 stores a user 110a (payment target person) and each piece of authentication information 111 to 11n (n is a natural number of 2 or more) in each of a plurality of electronic payment means in association with each other. The user 110a refers to identification information such as a user ID.

The authentication control unit 12 causes the authentication apparatus to perform face authentication for a shot image obtained by shooting the user at the time of payment. The collection unit 13 collects value-related information relating to a payment value possessed by the user in each of the electronic payment means using the authentication information 111 or the like associated with the user who has succeeded in the face authentication. That is, the collection unit 13 accesses each of payment systems respectively corresponding to the electronic payment means using corresponding authentication information, to acquire the value-related information possessed by the user. The value-related information includes a payment value itself such as a charge balance or a point balance and return information for returning the payment value (information about point return, etc.).

The determination unit 14 determines the electronic payment means as a payment target from among the plurality of electronic payment means based on the collected value-related information. The execution instruction unit 15 issues an instruction to perform payment processing using the electronic payment means as the payment target. The execution instruction unit 15 issues the execution instruction to the payment terminal or the payment system.

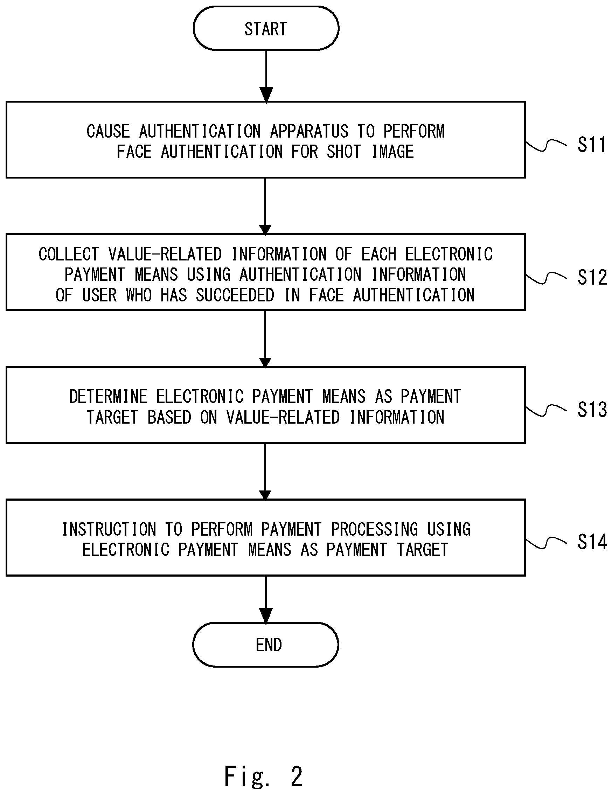

Fig. 2 is a flowchart illustrating a flow of an electronic payment method according to the first example embodiment. First, the authentication control unit 12 causes the authentication apparatus to perform face authentication for a shot image obtained by shooting a user at the time of payment (S11). Then, the collection unit 13 collects value-related information of each of electronic payment means using authentication information associated with the user who has succeeded in the face authentication (S12). The determination unit 14 determines the electronic payment means as a payment target from among the plurality of electronic payment means based on the collected value-related information (S13). Then, the execution instruction unit 15 issues an instruction to perform payment processing using the electronic payment means as the payment target (S14).

Thus, according to the present example embodiment, the electronic payment means as the payment target is determined using the newest value-related information at the time point of payment in each of the plurality of electronic payment means usable by the user. Accordingly, payment can be made using a payment service appropriate for the user at the time of payment.

The electronic payment apparatus 1 includes a processor, a memory, and a storage device, respectively, as components not illustrated. The storage device stores a computer program on which processing in the electronic payment method according to the present example embodiment is mounted. The processor reads the computer program into the memory from the storage device, and executes the computer program. As a result, the processor implements respective functions of the authentication control unit 12, the collection unit 13, the determination unit 14, and the execution instruction unit 15.

Alternatively, the authentication control unit 12, the collection unit 13, the determination unit 14, and the execution instruction unit 15 may be each implemented by dedicated hardware. Some or all of the components in each of the devices may be implemented by general-purpose or dedicated circuitry, a processor, or the like, or their combination. The components may be each configured by a single chip, or may be configured by a plurality of chips connected to one another via a bus. Some or all of the components in each of the devices may be implemented by a combination of the above-described circuitry or the like and a program. Examples of the processor to be used can include a CPU (central processing unit), a GPU (graphics processing unit), and an FPGA (field-programmable gate array).

If some or all of the components in the electronic payment apparatus 1 are each implemented by a plurality of information processing apparatuses or circuits, for example, the plurality of information processing apparatuses or circuits, for example, may be arranged in a concentrated manner or arranged in a distributed manner. For example, the information processing apparatuses or circuits, for example, may be implemented as a form, in which they are connected to one another via a communication network, such as a client server system or a cloud computing system. The function of the electronic payment apparatus 1 may be provided in an SaaS (software as a service) format.

### <Second Example Embodiment>

A second example embodiment is a modification to the above-described first example embodiment. The electronic payment apparatus 1 according to the first example embodiment causes an external authentication apparatus to perform face authentication. On the other hand, an electronic payment apparatus 1a according to the second example embodiment performs face authentication inside thereof.

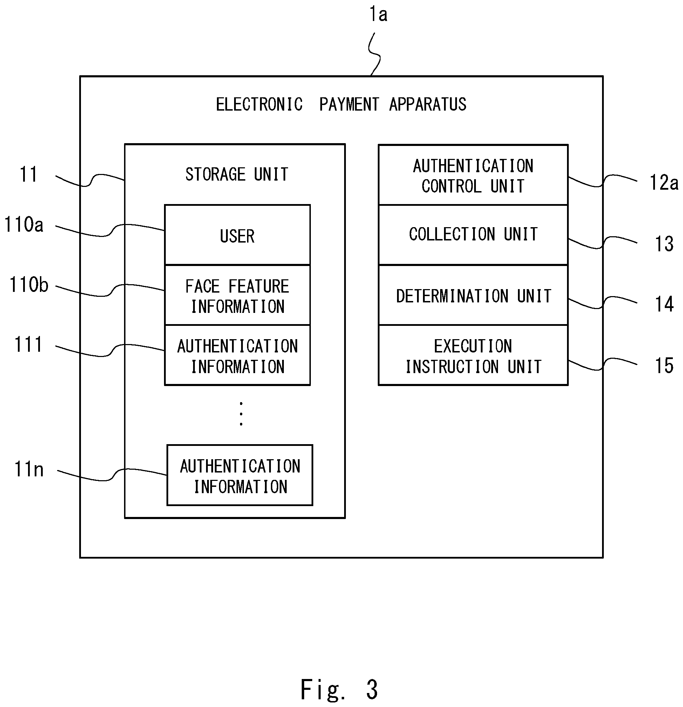

Fig. 3 is a block diagram illustrating a configuration of the electronic payment apparatus 1a according to the second example embodiment. The electronic payment apparatus 1a includes a storage unit 11, an authentication control unit 12a, a collection unit 13, a determination unit 14, and an execution instruction unit 15. Respective functions of the collection unit 13, the determination unit 14, and the execution instruction unit 15 are similar to those in the first example embodiment, and hence description thereof is omitted.

In the storage unit 11, face feature information 110b is further associated with a user 110a. The authentication control unit 12a performs face authentication using the face feature information 110b for a shot image obtained by shooting a user at the time of payment.

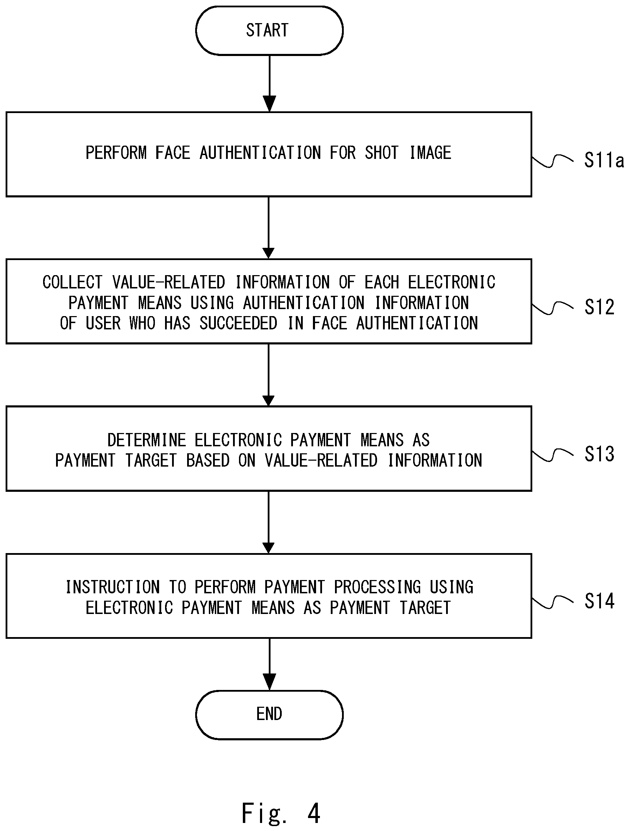

Fig. 4 is a flowchart illustrating a flow of an electronic payment method according to the second example embodiment. In Fig. 4, step S11 illustrated in Fig. 2 is replaced with step S11a, and other steps are similar to those illustrated in Fig. 2. In step S11a, the authentication control unit 12a performs face authentication using the face feature information 110b for the shot image.

Accordingly, the second example embodiment makes it possible to also produce a similar effect to that in the above-described first example embodiment.

### <Third Example Embodiment>

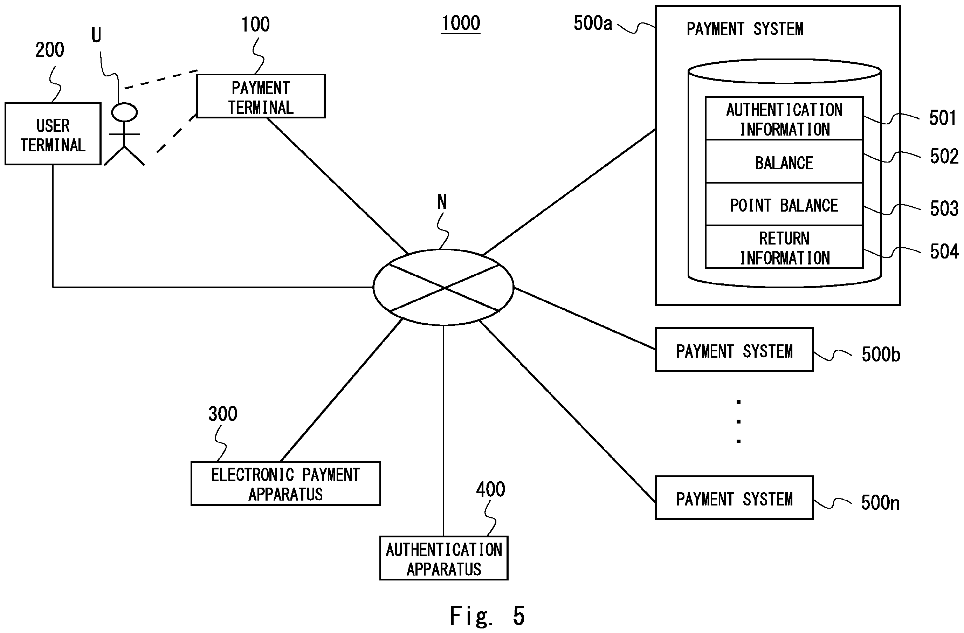

A third example embodiment illustrates a specific example of the above-described first example embodiment. Fig. 5 is a block diagram illustrating an entire configuration of an electronic payment system 1000 according to the third example embodiment. The electronic payment system 1000 includes a payment terminal 100, a user terminal 200, an electronic payment apparatus 300, an authentication apparatus 400, and payment systems 500a, 500b, ... and 500n. The payment terminal 100, the user terminal 200, the electronic payment apparatus 300, the authentication apparatus 400, and the payment systems 500a, 500b, ... and 500n are connected to one another via a network N. The network N is a wired or wireless communication line.

The authentication apparatus 400 is an information processing apparatus that stores a user ID and face feature information in association with each other. The authentication apparatus 400 is responsive to a face authentication request received from outside to collate a face image or face feature information included in the request with face feature information of each user and sends back a collation result (authentication result) to a request source.

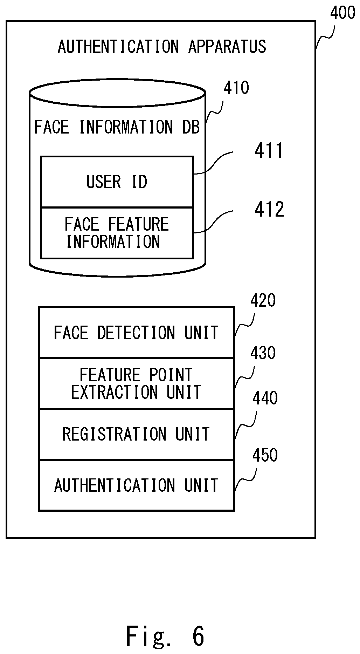

Fig. 6 is a block diagram illustrating a configuration of the authentication apparatus 400 according to the third example embodiment. The authentication apparatus 400 includes an information DB (database) 410, a face detection unit 420, a feature point extraction unit 430, a registration unit 440, and an authentication unit 450. The face information DB 410 stores a user ID 411 and face feature information 412 of the user ID in association with each other. The face feature information 412 is a set of feature points extracted from a face image. The authentication apparatus 400 may delete the face feature information 412 in the face feature DB 410 in response to a request from a registered user having the face feature information 412. Alternatively, the authentication apparatus 400 may delete the face feature information 412 after an elapse of a predetermined time period since the face feature information 412 was registered.

The face detection unit 420 detects a face region included in a registration image for registering face information, and outputs the face region to the feature point extraction unit 430. The feature point extraction unit 430 extracts feature points from the face region detected by the face detection unit 420, and outputs face feature information to the registration unit 440. The face feature information is a set of the extracted feature points. The feature point extraction unit 430 extracts feature points included in a face image received from the electronic payment apparatus 300, and outputs face feature information to the authentication unit 450.

The registration unit 440 newly issues the user ID 411 in registering the face feature information. The registration unit 440 registers the issued user ID 411 and the face feature information 412 extracted from the registration image in the face information DB 410 in association with each other. The authentication unit 450 performs face authentication using the face feature information 412. Specifically, the authentication unit 450 collates the face feature information extracted from the face image with the face feature information 412 in the face information DB 410. The authentication unit 450 sends back the presence or absence of a match between the face feature information to the electronic payment apparatus 300. The presence or absence of the match between the face feature information corresponds to a success or a failure in authentication.

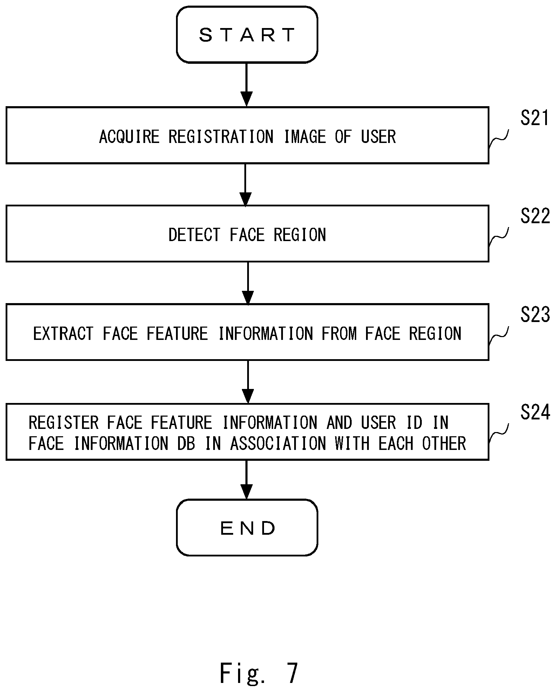

Fig. 7 is a flowchart illustrating a flow of face information registration processing according to the third example embodiment. First, the authentication apparatus 400 acquires a registration image included in a face information registration request (S21). For example, the authentication apparatus 400 receives the face information registration request from the user terminal 200 or the like via the network N. Then, the face detection unit 420 detects a face region included in the registration image (S22). Then, the feature point extraction unit 430 extracts feature points from the face region detected in step S22, and outputs face feature information to the registration unit 440 (S23). Finally, the registration unit 440 issues the user ID 411, and registers the user ID 411 and the face feature information 412 in the face information DB 410 in association with each other (S24). The authentication apparatus 400 may receive the face feature information 412 from the user terminal 200 or the like and register the face feature information 412 in the face information DB 410 in association with the user ID 411.

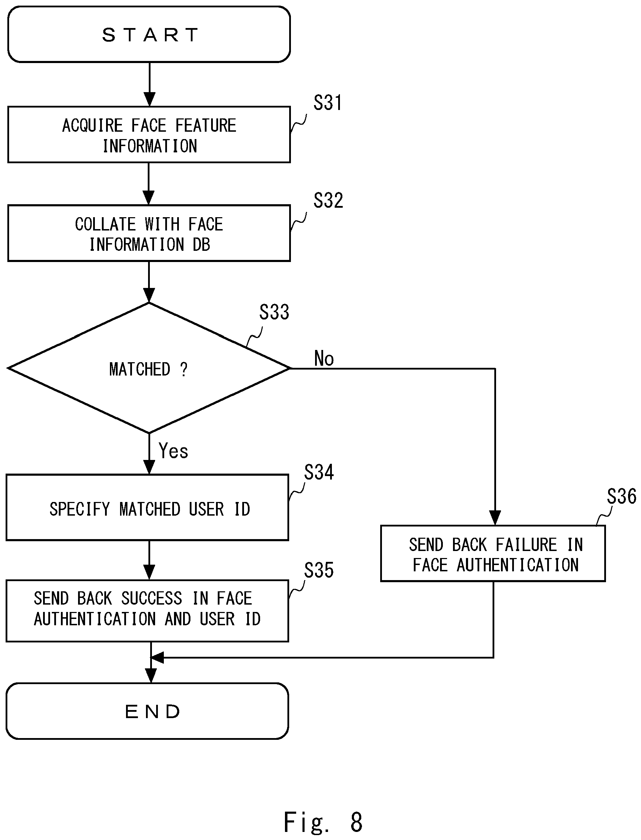

Fig. 8 is a flowchart illustrating a flow of face authentication processing by the authentication apparatus 400. First, the feature point extraction unit 430 acquires a face image for authentication included in a face authentication request (S31). For example, the authentication apparatus 400 receives a face authentication request from the electronic payment apparatus 300 via the network N, and extracts face feature information, like in steps S21 to S23, from the face image included in the face authentication request. Alternatively, the authentication apparatus 400 may receive face feature information from the electronic payment apparatus 300. Then, the authentication unit 450 collates the acquired face feature information with the face feature information 412 in the face information DB 410 (S32). If the face feature information have matched each other (Yes in S33), the authentication unit 450 specifies the user ID 411 of a user face feature information of which has matched the face feature information 412 (S34), and sends back a success in face authentication and the specified user ID 411 to the electronic payment apparatus 300. If the face feature information that matches the face feature information 412 does not exist (No in S33), the authentication unit 450 sends back a failure in face authentication to the electronic payment apparatus 300 (S36).

In step S32, the authentication unit 450 need not attempt to perform collation with all the face feature information 412 in the face information DB 410. For example, the authentication unit 450 may attempt to preferentially perform collation with the face feature information registered on the current day on which it has received a face authentication request. Alternatively, even if the face feature information has been registered before the previous day, when payment (using the payment terminal 100 and the electronic payment apparatus 300) on a specified day has been previously reserved, the authentication unit 450 may attempt to preferentially perform collation with face feature information of a user who has reserved the payment. This makes it possible to increase a collation speed. When the above-described preferential collation has not been successfully performed, collation with all remaining face feature information may be performed.

The user terminal 200 is an information terminal possessed by a user U. Examples of the user terminal 200 include a mobile phone terminal, a smartphone, a tablet terminal, and a PC (personal computer) on or to which a camera is loaded or connected. The user terminal 200 is associated with a user ID or face feature information of the user U. That is, the user terminal 200 is a display terminal that can be specified by the user ID or the face feature information in the electronic payment apparatus 300. For example, the user terminal 200 is a terminal into which the user U has already logged with his/her own user ID.

The user terminal 200 transmits a registration image to be used for face authentication of the user U to the authentication apparatus 400 and issues a face information registration request. The user terminal 200 may transmit face feature information extracted from the registration image to the authentication apparatus 400 and issue a face information registration request. The user terminal 200 may be a terminal that makes electronic payment by face authentication.

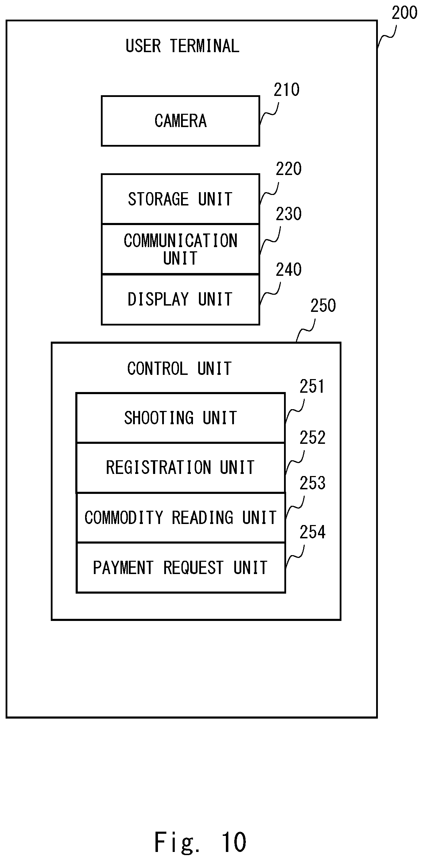

Then, the user terminal 200 will be described in detail. Fig. 10 is a block diagram illustrating a configuration of the user terminal 200 according to the third example embodiment. The user terminal 200 include a camera 210, a storage unit 220, a communication unit 230, a display unit 240, and a control unit 250. The camera 210 is a shooting device that performs shooting in response to control by the control unit 250. The storage unit 220 is a storage device that stores a program for implementing each of functions of the user terminal 200. The communication unit 230 is a communication interface with the network N. The display unit 240 is an input/output unit including a display device and an input device, and is a touch panel, for example. The display unit 240 displays a selection screen of electronic payment means, and receives a selection operation for a screen of the user U. The control unit 250 controls hardware included in the user terminal 200. The control unit 250 includes a shooting unit 251, a registration unit 252, a commodity reading unit 253, and a payment request unit 254.

The shooting unit 251 controls the camera 210, and shoots a registration image of the user U. The registration image is an image including at least a face region of the user. The shooting unit 251 outputs the registration image to the registration unit 252. The shooting unit 251 may shoot the user U at the time of payment by the camera 210. In the case, the shooting unit 251 outputs a shot image for authentication (for payment) by the camera 210 to the payment request unit 254. The registration unit 252 transmits a face information registration request including the registration image to the authentication apparatus 400 via the network N. The commodity reading unit 253 reads respective bar codes or the like from commodity images of commodities shot by the camera 210, aggregates respective prices of the commodities associated with the bar codes or the like, and calculates a payment amount.

The payment request unit 254 transmits a payment means presentation request including the shot image for authentication and the payment amount to the electronic payment apparatus 300 via the network N. The payment request unit 254 receives a selection screen of electronic payment means from the electronic payment apparatus 300 via the network N, and displays the selection screen by the display unit 240. The payment request unit 254 receives selection of the electronic payment means by the user U for the selection screen, and transmits a payment request including a selected electronic payment means ID to the electronic payment apparatus 300 via the network N. The payment request unit 254 receives a payment result from the electronic payment apparatus 300 via the network N, and displays the payment result on the display unit 240.

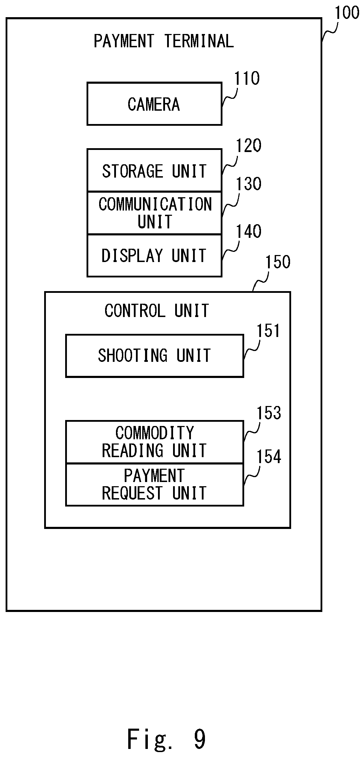

Then, the payment terminal 100 is a terminal that makes electronic payment using face authentication. Fig. 9 is a block diagram illustrating a configuration of the payment terminal 100 according to the third example embodiment. The payment terminal 100 includes a camera 110, a storage unit 120, a communication unit 130, a display unit 140, and a control unit 150.

The camera 110 is a shooting device that performs shooting in response to control by the control unit 150. Particularly, the camera 110 shoots the user U at the time of payment. The storage unit 120 is a storage device that stores a program for implementing each of functions of the payment terminal 100. The communication unit 130 is a communication interface with the network N. The display unit 140 is an input/output unit including a display device and an input device, and is a touch panel, for example. The display unit 240 displays a selection screen of electronic payment means, and receives a selection operation for a screen of the user U. The control unit 150 controls hardware included in the payment terminal 100. The control unit 150 includes a shooting unit 151, a commodity reading unit 153, and a payment request unit 154. The control unit 150 may include a unit corresponding to the above-described registration unit 252.

The shooting unit 151 controls the camera 110, and shoots the user U at the time of payment. A shot image is an image including at least a face region of the user U. The shooting unit 151 outputs a shot image for authentication (for payment) by the camera 110 to the payment request unit 154. The commodity reading unit 153 reads respective bar codes or the like of commodities by a scanner (not illustrated), aggregates respective prices of the commodities associated with the bar codes or the like, and calculates a payment amount. The commodity reading unit 153 may read the respective bar codes or the like from shot images of the commodities by the camera 110.

The payment request unit 154 transmits a payment means presentation request including the shot image for authentication and the payment amount to the electronic payment apparatus 300 via the network N. The payment request unit 154 receives a selection screen of electronic payment means from the electronic payment apparatus 300 via the network N, and displays the selection screen by the display unit 140. The payment request unit 154 receives selection of the electronic payment means by the user U for the selection screen, and transmits a payment request including a selected electronic payment means ID to the electronic payment apparatus 300 via the network N. The payment request unit 154 receives a payment result from the electronic payment apparatus 300 via the network N, and displays the payment result on the display unit 140.

The payment system 500a is an information system that performs payment processing by the corresponding electronic payment means, as described above. The payment system 500a stores authentication information 501, a balance 502, a point balance 503, and return information 504 in association with one another. The balance 502, the point balance 503, and the return information 504 are each an example of the above-described value-related information. The balance 502 and the point balance 503 are each an example of a payment value possessed by the user.

The authentication information 501 is a user ID and a password in the payment system 500a. The balance 502 is a charge balance of cash possessed by a corresponding user. The point balance 503 is a point balance assigned to the corresponding user, and is an example of privilege information. The privilege information may be miles or others. The return information 504 is information for returning a payment value, for example, a rate of returning points or cash to a payment amount and points, an amount, or the like to be returned. The return information 504 can also be referred to as return-scheduled information. The return information 504 may be campaign information a period of which has been set. For example, the return-scheduled information may be information such as a 30% discount within one month from new admission. The return information 504 is not limited to return of a payment value but may be campaign information such as a present of a commodity by drawing. The return-scheduled information may be information corresponding to a usage record of the user U in each of the electronic payment means. If there is a payment record of a predetermined amount or more by the corresponding electronic payment means, for example, a discount rate may be increased. The balance 502 and the return information 504 are not essential. If the electronic payment means is a credit card, for example, the balance 502 does not exist.

The payment system 500a receives a value-related information request including authentication information from the electronic payment apparatus 300 via the network N, and sends back the balance 502, the point balance 503, and the return information 504 associated with the authentication information included in the request. The payment system 500a receives a payment instruction from the electronic payment apparatus 300 via the network N, and performs payment processing depending on the payment amount for a user associated with authentication information included in the payment instruction. If the electronic payment means is code payment, for example, the payment system 500a subtracts a payment amount from the balance 502 associated with the authentication information included in the payment instruction, calculates points based on the return information 504, and adds the calculated points to the point balance 503. The payment system 500a sends back a payment result as a result of payment processing to the electronic payment apparatus 300 via the network N.

The payment systems 500b to 500n respectively have similar functions to that of the payment system 500a, although they respectively correspond to electronic payment means different from the payment system 500a, and hence detailed description thereof is omitted.

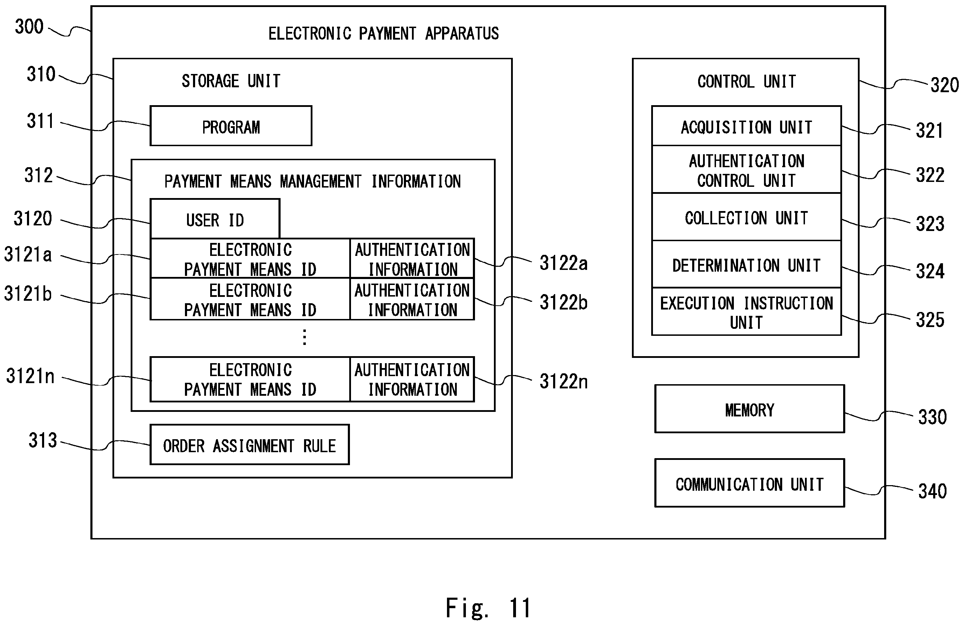

Fig. 11 is a block diagram illustrating a configuration of an electronic payment apparatus 300 according to the third example embodiment. The electronic payment apparatus 300 includes a storage unit 310, a control unit 320, a memory 330, and a communication unit 340. The storage unit 310 is a storage device such as a hard disk or a flash memory. The storage unit 310 stores a program 311, payment means management information 312, and an order assignment rule 313. The program 311 is a computer program on which processing for an electronic payment method according to the present example embodiment is mounted.

The payment means management information 312 is information for managing electronic payment means usable for each user and its authentication information. In the payment means management information 312, a set of an electronic payment means ID 3121a and authentication information 3122a, a set of an electronic payment means ID 3121b and authentication information 3122b, ..., and a set of an electronic payment means ID 3121n and authentication information 3122n are associated with a user ID 3120. The electronic payment means IDs 3121a to 3121n are each identification information of the electronic payment means, and are respectively associated with payment systems 500a to 500n. The electronic payment means IDs 3121a to 3121n has their respective destination information (addresses) included in the payment systems 500a to 500n. The authentication information 3122a to 3122n are respectively information such as IDs and passwords in the payment systems associated with the corresponding electronic payment means for a target user in the user ID 3120.

The order assignment rule 313 is an example of an order assignment criterion. The order assignment rule 313 is information that defines a criterion for respectively assigning orders based on value-related information to a plurality of electronic payment means. For example, the order assignment rule 313 may be a rule of sorting (a sort key) based on the value-related information. The order assignment rule 313 may be an order assignment rule when the electronic payment means are rearranged depending on a charge balance or a point balance, for example. The order assignment rule 313 may be an order assignment rule when the electronic payment means are rearranged depending on a point return amount or a point return rate. The order assignment rule 313 may be an order assignment rule when the electronic payment means are rearranged using a remaining amount obtained by paying a payment amount by a point balance as a new payment amount. The order assignment rule 313 may be an order assignment rule when the electronic payment means are rearranged by further adding a point return amount or the like based on return information within a time limit. The order assignment rule 313 may be a rule (popularity order) based on a usage record of electronic payment means.

The memory 330 is a volatile storage device such as a RAM (random access memory), and is a storage region in which information is to be temporarily held when the control unit 320 operates. The communication unit 340 is a communication interface with the network N.

The control unit 320 is a processor, i.e., a control device that controls each of components in the electronic payment apparatus 300. The control unit 320 reads the program 311 into the memory 330 from the storage unit 310, and executes the program 311. As a result, the control unit 320 implements respective functions of an acquisition unit 321, an authentication control unit 322, a collection unit 323, a determination unit 324, and an execution instruction unit 325.

The acquisition unit 321 receives the above-described payment means presentation request from the payment terminal 100 or the user terminal 200 via the network N, and acquires a shot image and a payment amount included in the payment means presentation request. The shot image is obtained by shooting the user U at the time of payment.

The authentication control unit 322 is an example of the above-described authentication control unit 12. The authentication control unit 322 causes the authentication apparatus 400 to perform face authentication for a shot image acquired by the acquisition unit 321. For example, the authentication control unit 321 transmits a face authentication request including the acquired shot image to the authentication apparatus 400 via the network N, and receives a face authentication result from the authentication apparatus 400. The authentication control unit 321 may detect a face region of the user U from the shot image and include an image of the face region in the face authentication request. Alternatively, the authentication control unit 321 may extract face feature information from the face region and include the face feature information in the face authentication request.

The collection unit 323 is an example of the above-described collection unit 13. The collection unit 323 specifies, when the face authentication result received by the authentication control unit 322 represents a success in face authentication, a user ID included in the face authentication result. The collection unit 323 reads out a set of each of electronic payment means IDs associated with the specified user ID 3120 and associated authentication information from the storage unit 310. The collection unit 323 transmits a value-related information request including authentication information to each of payment systems respectively represented by addresses corresponding to the electronic payment means IDs via the network N. The collection unit 323 collects value-related information by receiving the value-related information respectively sent back from the payment systems.

The determination unit 324 is an example of the above-described determination unit 14. The determination unit 324 applies the order assignment rule 313 to the value-related information collected by the collection unit 323 to assign an order to each of the electronic payment means, and determines the electronic payment means as a payment target depending on the order. Particularly, the determination unit 324 presents the plurality of electronic payment means to the user U, respectively, according to the assigned orders. Specifically, the determination unit 324 transmits the plurality of electronic payment means respectively assigned the orders to a request source of the payment means presentation request via the network N. For example, the determination unit 324 sorts the plurality of electronic payment means, respectively, according to the assigned orders, generates a screen on which the predetermined number of electronic payment means as a sorting result are arranged in ascending order (a payment means selection screen), and transmits the screen to the request source via the network N.

Further, it is assumed that the electronic payment means to be always displayed separately from the orders among the plurality of electronic payment means are previously designated. In the case, the determination unit 324 may display the predetermined number of electronic payment means assigned the higher orders as a sorting result and generate a screen such that the above-described previously designated electronic payment means are displayed thereon. This is applicable to the electronic payment means as an advertisement target, for example. Even the electronic payment means to be lower in order based on the order assignment rule 313 and excluded from a display target can be preferentially displayed on its own display region if designated as an advertisement.

The determination unit 324, together with the electronic payment means, may present the corresponding value-related information. Specifically, the authentication information 501, the balance 502, and the point balance 503 may be together mentioned for each type of the electronic payment means.

The determination unit 324 receives selection by the user U from among the presented electronic payment means, and determines the electronic payment means selected by the user U as a payment target. Specifically, the determination unit 324 receives one electronic payment means ID selected by the user U, as included in a payment request as a selection result, for a payment means selection screen displayed on a terminal at a request source (e.g., the payment terminal 100) via the network N. The determination unit 324 determines the electronic payment means ID represented by the received selection result as the electronic payment means as a payment target.

The execution instruction unit 325 is an example of the above-described execution instruction unit 15. The execution instruction unit 325 reads out authentication information associated with the determined electronic payment means ID as the payment target from the storage unit 310. The execution instruction unit 325 transmits a payment instruction, including authentication information and a payment amount, to the payment system represented by the electronic payment means ID via the network N. The execution instruction unit 325 receives a payment result via the network N, and transmits the received payment result to a request source via the network N.

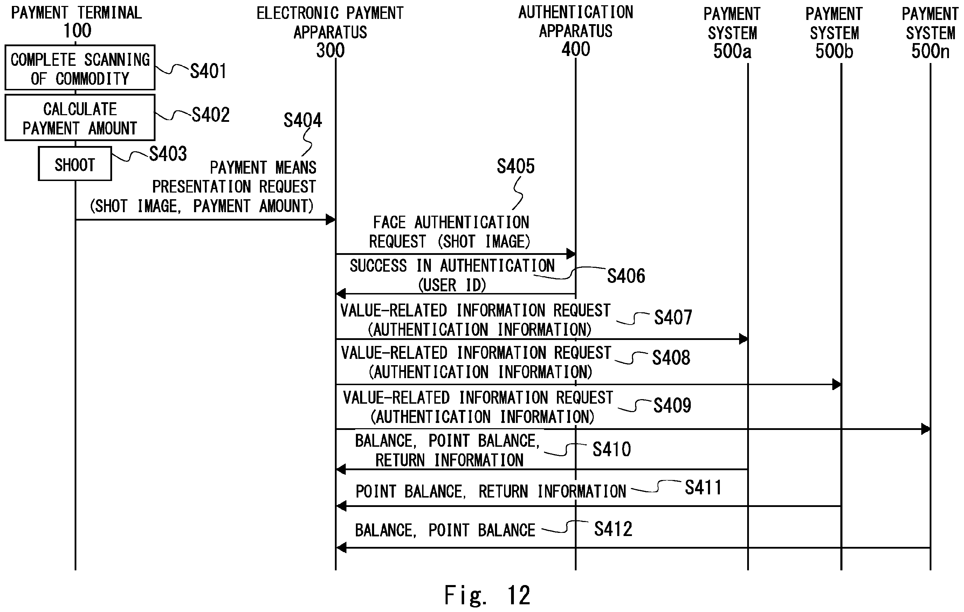

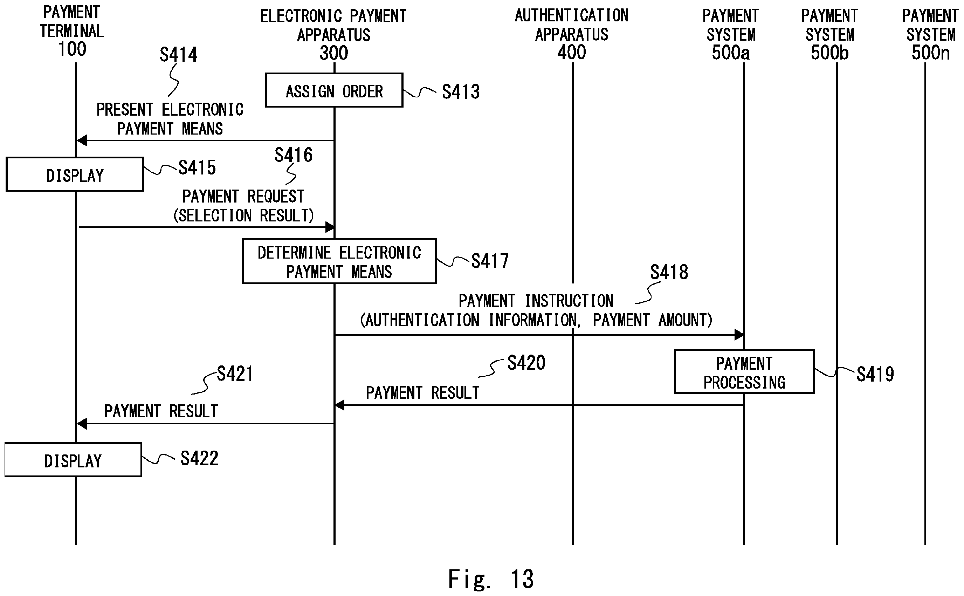

Figs. 12 and 13 are sequence diagrams each illustrating a flow of electronic payment processing according to the third example embodiment. Although an example using the payment terminal 100 will be described below, the same applies to the user terminal 200. First, it is assumed that the payment terminal 100 scans a commodity to be payed by the user U, to complete the scanning (S401). Then, the payment terminal 100 calculates a payment amount of the scanned commodity (group) (S402). The payment terminal 100 shoots the user U using the camera 110 (S403), and transmits a payment means presentation request including a shot image and a payment amount to the electronic payment apparatus 300 via the network N (S404).

The acquisition unit 321 in the electronic payment apparatus 300 acquires the shot image and the payment amount from the received payment means presentation request. The authentication control unit 322 transmits a face authentication request including the acquired shot image to the authentication apparatus 400 via the network N (S405). The authentication control unit 322 receives a face authentication result indicating that authentication has been successfully performed from the authentication apparatus 400 via the network N (S406). The face authentication result includes a user ID of a user who has succeeded in face authentication.

The collection unit 323 reads out a set of each of electronic payment means IDs associated with the user ID of the user who has succeeded in face authentication and authentication information associated therewith from the storage unit 310. For example, the collection unit 323 transmits a value-related information request including the authentication information 3122a to the payment system 500a corresponding to the electronic payment means ID 3121a via the network N (S407). The collection unit 323 transmits a value-related information request including the authentication information 3122b to the payment system 500b corresponding to the electronic payment means ID 3121b via the network N (S408). Similarly, the collection unit 323 transmits a value-related information request including the authentication information 3122n to the payment system 500n corresponding to the electronic payment means IDs 3121n via the network N (S409). In response to these, the collection unit 323 receives the balance 502, the point balance 503, and the return information 504 possessed by the user U in the payment system 500a, for example, from the payment system 500a via the network N (S410). The collection unit 323 receives the point balance 503 and the return information 504 possessed by the user U in the payment system 500b, for example, from the payment system 500b via the network N (S411). The collection unit 323 receives the balance 502 and the point balance 503 possessed by the user U in the payment system 500n, for example, from the payment system 500n via the network N (S412). Steps S407, S408, and S409 may be in parallel regardless of their respective orders. Steps S410, S411, and S412 may be respectively in any orders.

After steps S410, S411, and S412, the determination unit 324 applies the order assignment rule 313 to each of the collected value-related information, and assigns an order to each of the electronic payment means (S413). The determination unit 324 presents the electronic payment means, respectively, according to the orders (S414). For example, the determination unit 324 generates a payment means selection screen for displaying a sorting result according to the orders and receiving selection, and transmits the payment means selection screen to the payment terminal 100 via the network N.

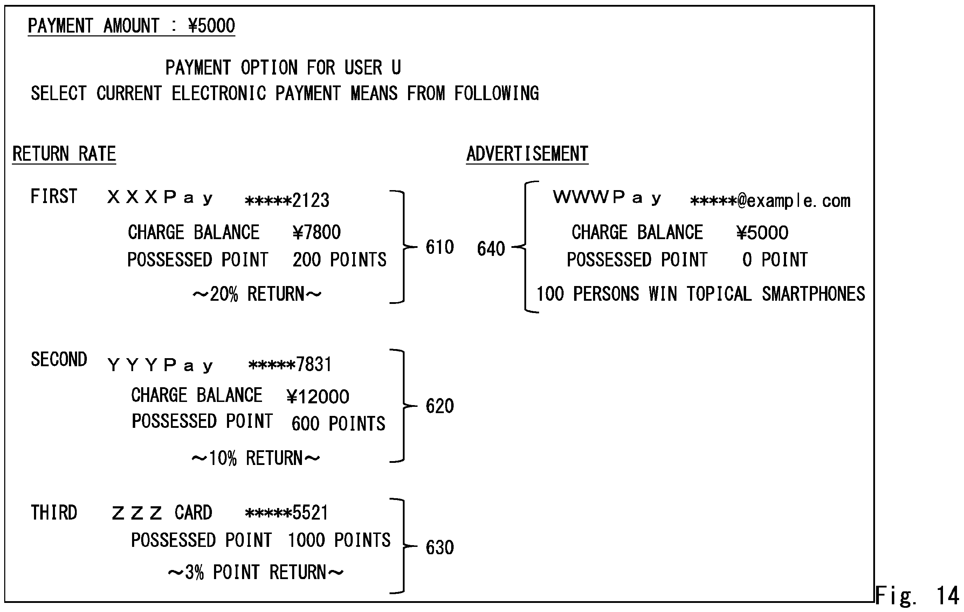

The payment terminal 100 displays the received payment means selection screen on the display unit 140 (S415). Fig. 14 is a diagram illustrating an example of a payment means selection screen 600 according to the third example embodiment. The payment means selection screen 600 displays a result obtained by respectively assigning orders to electronic payment means at return rates and sorting the electronic setting means, for example. Sorting result display selection regions 610 to 630 respectively indicate that electronic payment means names, charge balances, possessed points, and return information at the first to third return rates are displayed. An advertisement display selection region 640 is a region where electronic payment means at the fourth or succeeding return rate is displayed because it is designated as an advertisement. It is assumed that the electronic payment means for which an advertisement fee has been paid is displayed on the advertisement display selection region 640. The size or the like of a region to be displayed may differ depending on an amount of the advertisement fee. If a plurality of electronic payment means are displayed on the advertisement display selection region 640, a display size and a display content may differ depending on an advertisement region. It is assumed that the sorting result display selection regions 610 to 630 and the advertisement display selection region 640 can receive a selection operation for the display unit 140 by the user U.

The payment terminal 100 receives a selection operation from the user U for one region in the payment means selection screen 600, and transmits a payment request including an electronic payment means ID as a selection result to the electronic payment apparatus 300 via the network N (S416). The determination unit 324 in the electronic payment apparatus 300 extracts the electronic payment means ID from the received payment request, and determines electronic payment means represented by the extracted electronic payment means ID as a payment target (S417). Description is made, assuming that the electronic payment means ID 3121a has been determined as a payment target.

Then, the execution instruction unit 325 reads out the authentication information 3122a associated with the determined electronic payment means ID 3121a as the payment target from the storage unit 310. The execution instruction unit 325 transmits a payment instruction including the authentication information 3122a and a payment amount to the payment system 500a represented by the electronic payment means ID 3121a via the network N (S418). The payment system 500a collates the authentication information 3122a and the authentication information 501 to perform authentication processing, and performs payment processing for the payment amount when authentication has been successfully performed (S419). The payment system 500a sends back a payment result to the electronic payment apparatus 300 via the network N. The execution instruction unit 325 receives the payment result via the network N, and sends back the received payment result to the payment terminal 100 via the network N (S421). The payment terminal 100 displays the received payment result on the display unit 140 (S422).

Thus, according to the present example embodiment, the user can select, upon grasping a newest situation for each electronic payment means, the electronic payment means, thereby making it possible to make payment using a payment service appropriate for the user at the time of payment.

An electronic payment system 1000 may issue a face authentication request to the authentication apparatus 400 instead of the electronic payment apparatus 300. In the case, after step S403 illustrated in Fig. 12, for example, the payment terminal 100 transmits a face authentication request including a shot image to the authentication apparatus 400 via the network N. The payment terminal 100 receives a face authentication result indicating that authentication has been successfully performed from the authentication apparatus 400 via the network N. Then, the payment terminal 100 transmits a payment means presentation request including a user ID of a user who has succeeded in face authentication to the electronic payment apparatus 300 via the network N. In response to this, the collection unit 323 may read out a set of each of electronic payment means IDs associated with the user ID of the user who has succeeded in face authentication and associated authentication information from the storage unit 310, to perform step S407.

### <Fourth Example Embodiment>

A fourth example embodiment is a modification to the above-described third example embodiment, in which an electronic payment apparatus 300 determines electronic payment means based on a rule previously designated without depending on selection by a user to make payment.

An electronic payment system according to the fourth example embodiment has an improvement over a determination unit 324 in the electronic payment apparatus 300. Other components are similar to those in the third example embodiment, and hence overlapping description is omitted below.

The determination unit 324 applies an order assignment rule 313 to value-related information collected by a collection unit 323 to assign an order to each of electronic payment means, and determines the electronic payment means as a payment target depending on the order. Particularly, the determination unit 324 according to the fourth example embodiment determines the electronic payment means assigned the highest order among the plurality of electronic payment means as the payment target.

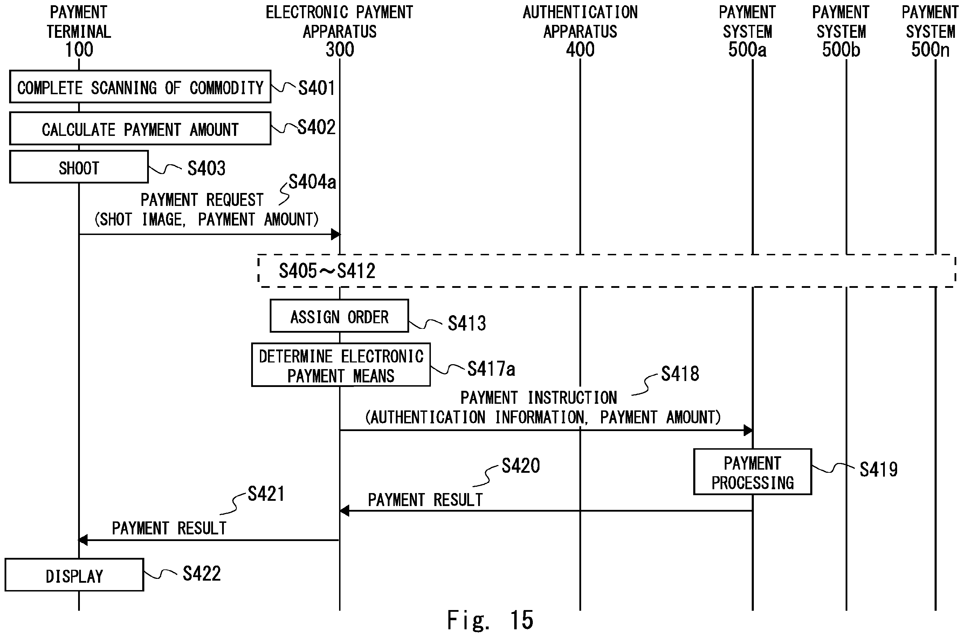

Fig. 15 is a sequence diagram illustrating a flow of electronic payment processing according to the fourth example embodiment. Fig. 15 has an improvement over the electronic payment processing illustrated in Figs. 12 and 13, described above, and overlapping description is omitted.

After step S403, a payment terminal 100 transmits a payment request including a shot image and a payment amount to the electronic payment apparatus 300 via a network N (S404a). An acquisition unit 321 in the electronic payment apparatus 300 acquires the shot image and the payment amount from the received payment request. Then, steps S405 to S412 are performed, like in Fig. 12.

After step S412, the determination unit 324 applies an order assignment rule 313 to the collected value-related information to assign an order to each of electronic payment means (S413). The determination unit 324 determines the electronic payment means assigned the highest order as a payment target (S417a). Then, steps S418 to S422 are performed, like in Fig. 13.

Thus, in the fourth example embodiment, the electronic payment apparatus 300 automatically determines the electronic payment means most appropriate at the time point as a payment target in the order assignment rule 313. Accordingly, a user can make payment using the most appropriate electronic payment means in a short time period without selectively operating the electronic payment means.

### <Fifth Example Embodiment>

A fifth example embodiment is a modification to the above-described third example embodiment. A determination unit 324 according to the fifth example embodiment determines electronic payment means assigned the highest order among a plurality of electronic payment means as a payment target when it has not received selection from a user within a predetermined time period after presenting the electronic payment means to the user.

An electronic payment system according to the fifth example embodiment has an improvement over the determination unit 324 in an electronic payment apparatus 300. Other components are similar to those in the third example embodiment, and hence overlapping description is omitted below.

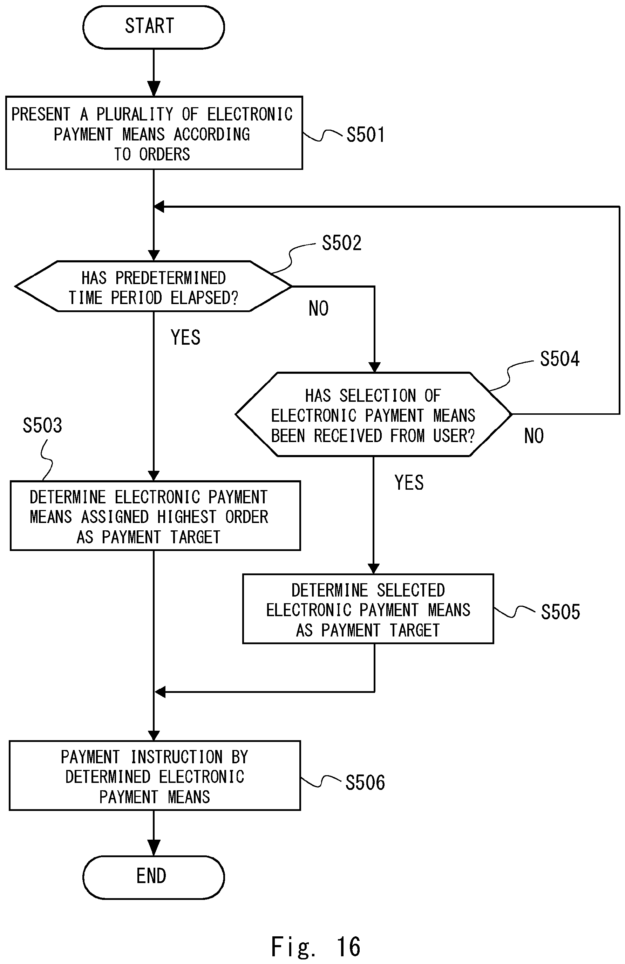

Fig. 16 is a flowchart illustrating a flow of electronic payment processing according to the fifth example embodiment. First, it is assumed that the steps S401 to S413 illustrated in Fig. 12 have already been performed. At this time, the determination unit 324 presents a plurality of electronic payment means to the user according to orders, like in step S414 (S501). The electronic payment apparatus 300 determines whether or not a predetermined time period has elapsed (S502). Although the predetermined time period is three seconds, for example, the predetermined time period is not limited to this. If the predetermined time period has not elapsed since step S501 was performed, the determination unit 324 determines whether or not selection of the electronic payment means has been received from a user U (S504). For example, the determination unit 324 determines whether or not a payment request including a selection result has been received from a payment terminal 100 via a network N. If the selection of the electronic payment means has not been received from the user U (NO in S504), the processing returns to step S502. At this time, the determination unit 324 may wait for a predetermined time period.

If in step S502, the predetermined time period has elapsed since step S501 was performed (YES in S502), the determination unit 324 determines the electronic payment means assigned the highest order as a payment target (S503). If the selection of the electronic payment means has been received from the user U in step S504, the determination unit 324 determines the selected electronic payment means as the payment target (S505). In step S503 or S505, an execution instruction unit 325 issues a payment instruction by the determined electronic payment means, like in step S418 (S506).

Thus, in the fifth example embodiment, an option for the electronic payment means is provided to the user only for a predetermined time period. If the electronic payment means has not yet been selected, a payment target is automatically determined, assuming that the electronic payment means assigned the highest order has been selected. Therefore, if the electronic payment means desired by the user is displayed in the highest order, a selection operation need not be performed, resulting in no completeness. On the other hand, if the electronic payment means desired by the user is not displayed in the highest order, the user can select the desired electronic payment means, resulting in high convenience.

### <Sixth Example Embodiment>

A sixth example embodiment is an improvement over the above-described third example embodiment. An AI (artificial intelligence) model is learned using a selection history of electronic payment by a user as learning data, and electronic payment means are respectively assigned orders using the learned model.

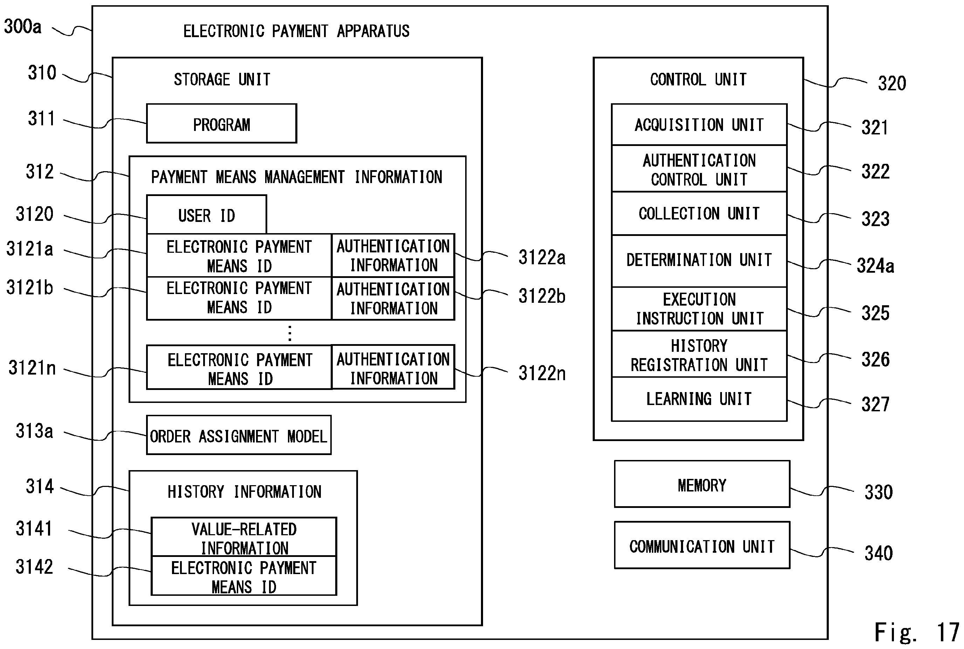

Fig. 17 is a block diagram illustrating a configuration of an electronic payment apparatus 300a according to the sixth example embodiment. The electronic payment apparatus 300a has replacement of the order assignment rule 313 with an order assignment model 313a in a storage unit 310 and addition of history information 314, and has replacement of the determination unit 324 with a determination unit 324a in a control unit 320 and addition of a history registration unit 326 and a learning unit 327, as compared with the above-described electronic payment apparatus 300. Other components in the electronic payment system according to the sixth example embodiment are similar to those in the third example embodiment, and hence overlapping description is omitted below.

The history information 314 is information obtained by associating a plurality of value-related information 3141 collected in certain payment and an electronic payment means ID 3142 determined as a payment target in the case with each other. In the history information 314, respective information in a plurality of payments are stored.

The order assignment model 313a is an example of an order assignment criterion. The order assignment model 313a is an AI model for performing processing for respectively assigning orders to a plurality of electronic payment means upon receiving the value-related information, and is a program module or a model type on which processing for assigning the orders is mounted. For example, the order assignment model 313a is a mathematical model operated using respective numerical values (balances, point balances, return rates of return information, etc.) of the value-related information of the plurality of electronic payment means as input data and using a predetermined parameter (weighting factor) as each of the input data. The order assignment model 313a outputs a result of assigning an order to each of the electronic payment means as an operation result.

The history registration unit 326 registers a set of the collected value-related information 3141 and the determined electronic payment means ID 3142 as the payment target as the history information 314 in the storage unit 310. The learning unit 327 uses the history information 314 as learning data to learn the order assignment model 313a. For example, the learning unit 327 may use the value-related information 3141 in the history information 314 as input data to learn the order assignment model 313a using the electronic payment means ID 3142 as correct answer data. The determination unit 324a respectively assigns orders to the plurality of electronic payment means using the order assignment model 313a that has already been learned as an order assignment criterion. For example, the determination unit 324a inputs the plurality of value-related information collected by a collection unit 323 at the time of payment to the order assignment model 313a, and assigns the order to each of the electronic payment means from an output result from the order assignment model 313a.

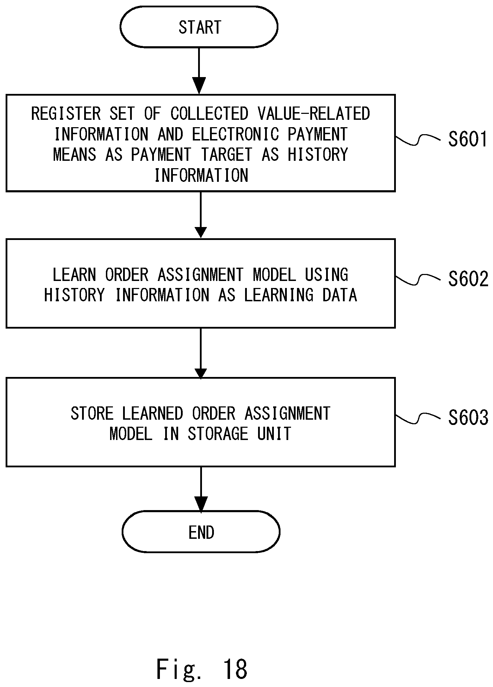

Fig. 18 is a flowchart illustrating a flow of learning processing according to the sixth example embodiment. First, the history registration unit 326 registers a set of value-related information collected at the time of payment and electronic payment means as a payment target as the history information 314 in the storage unit 310 (S601). Then, the learning unit 327 learns the order assignment model 313a using the history information 314 as learning data (S602). For example, the learning unit 327 updates a parameter of the order assignment model 313a such that the electronic payment means as the payment target is optimized in the learning data. The learning unit 327 stores the order assignment model 313a that has already been learned in the storage unit 310 (S603). As a result, the determination unit 324a can use the order assignment model 313a that has already been learned in subsequent order assignment.

Thus, according to the sixth example embodiment, since the model is learned using a history of the electronic payment means which the user selected depending on the value-related information at each time. Accordingly, the learned model can present the electronic payment means suiting a user's taste. If the sixth example embodiment is applied to the above-described fourth example embodiment, the user can make payment using the electronic payment means assigned the highest order derived by the order assignment model 313a without selecting the electronic payment means. If the sixth example embodiment is applied to the above-described fifth example embodiment, the user can receive presentation of the payment means in an optimum order according to the value-related information at the time point and can confirm that the order of the selected payment means gradually rises.

### <Seventh Example Embodiment>

A seventh example embodiment is a modification to the above-described third example embodiment. In the third example embodiment, a face image of a user is shot after all commodities to be payed are scanned, to present options for electronic payment means. On the other hand, in the seventh example embodiment, shooting is started before scanning of all commodities is completed, i.e., before at least a payment amount is confirmed, to present options for electronic payment means.

An acquisition unit 321 according to the seventh example embodiment acquires a shot image before reading processing for all the payment target commodities for payment is completed. An execution instruction unit 325 according to the seventh example embodiment issues an instruction to perform payment processing using the electronic payment means as a payment target after completion of the reading processing for all the payment target commodities. Other components in the electronic payment system according to the seventh example embodiment are similar to those in the third example embodiment, and hence overlapping description is omitted below.

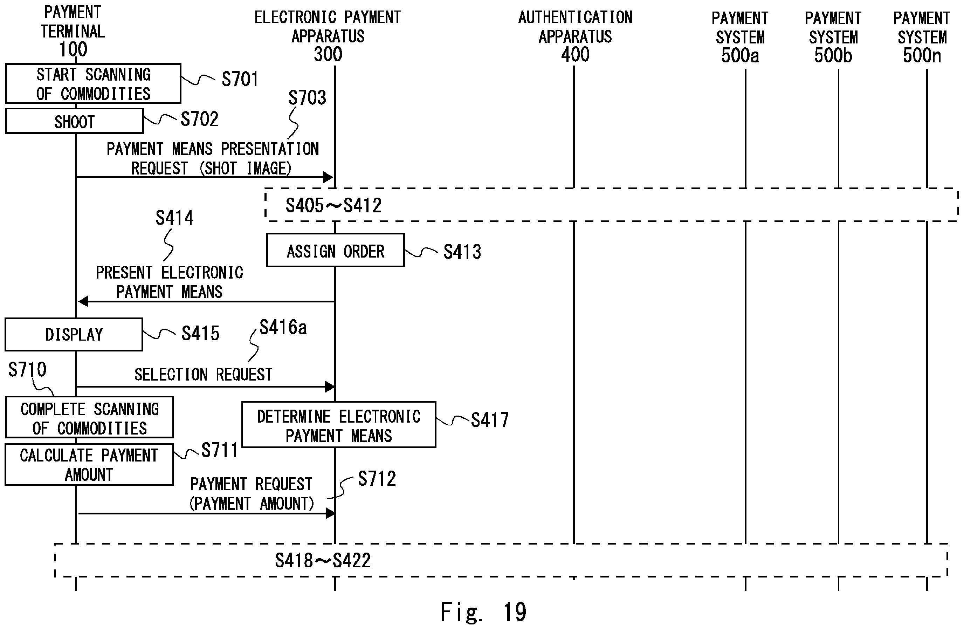

Fig. 19 is a sequence diagram illustrating a flow of electronic payment processing according to the seventh example embodiment. First, a payment terminal 100 starts to scan a plurality of payment target commodities (S701). The payment terminal 100 shoots a user U using a camera 110 (S702), and transmits a payment means presentation request including a shot image to an electronic payment apparatus 300 via a network N (S703). An acquisition unit 321 in the electronic payment apparatus 300 acquires the shot image from the received payment means presentation request. Thereafter, steps S405 to S415 are similar to those illustrated in Figs. 12 and 13.

It is assumed that a payment means selection screen 600 is displayed on a display unit 140 in the payment terminal 100 because a commodity is being scanned. At this time point, a payment amount has not been confirmed. However, the user can select electronic payment means, a credit card, or the like having a certain charge balance.

The payment terminal 100 receives a selection operation from the user U for one region in the payment means selection screen 600, and transmits an electronic payment means ID as a selection result to the electronic payment apparatus 300 via the network N (S416a). That is, at this time point, a payment amount has not been confirmed, and a payment request is not transmitted.

A determination unit 324 in the electronic payment apparatus 300 determines electronic payment means represented by the received electronic payment means ID as a payment target (S417).

At this time, it is assumed that the payment terminal 100 has completed scanning of all payment target commodities (S710). The payment terminal 100 calculates a payment amount of the scanned commodities (group) (S711). The payment terminal 100 transmits a payment request including the payment amount to the electronic payment apparatus 300 via the network N (S712). In response to this, the execution instruction unit 325 issues an instruction to perform payment processing using the electronic payment means as the payment target. Then, steps S418 to S422 are performed, like in Fig. 13.

The shooting in step S702 may be before the start of the scanning in step S701.

Thus, the seventh example embodiment makes it possible for a user to previously select the electronic payment means without waiting for completion of scanning of commodities. Accordingly, payment processing is immediately performed after the completion of the scanning. Therefore, a time period required for entire electronic payment processing can be shortened.

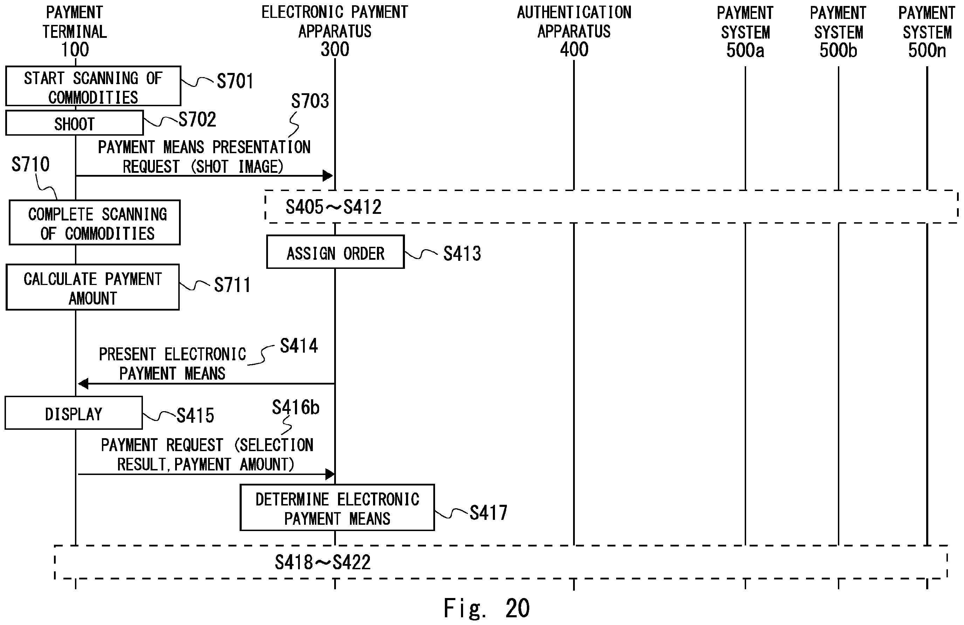

The electronic payment processing according to the seventh example embodiment may be performed in the following flow. Fig. 20 is a sequence diagram illustrating another flow of the electronic payment processing according to the seventh example embodiment. As a difference from Fig. 19, described above, the payment terminal 100 completes scanning of all payment target commodities (S710), and calculates a payment amount of the scanned commodities (group) (S711) after a payment means presentation request in step S703. Then, the determination unit 324 presents electronic payment means according to an order (S414), and the payment terminal 100 displays a received payment means selection screen on the display unit 140 (S415). The payment terminal 100 receives a selection operation from the user U for one region in the payment means selection screen 600, and transmits a payment request including an electronic payment means ID of a selection result and a payment amount to the electronic payment apparatus 300 via the network N (S416b).

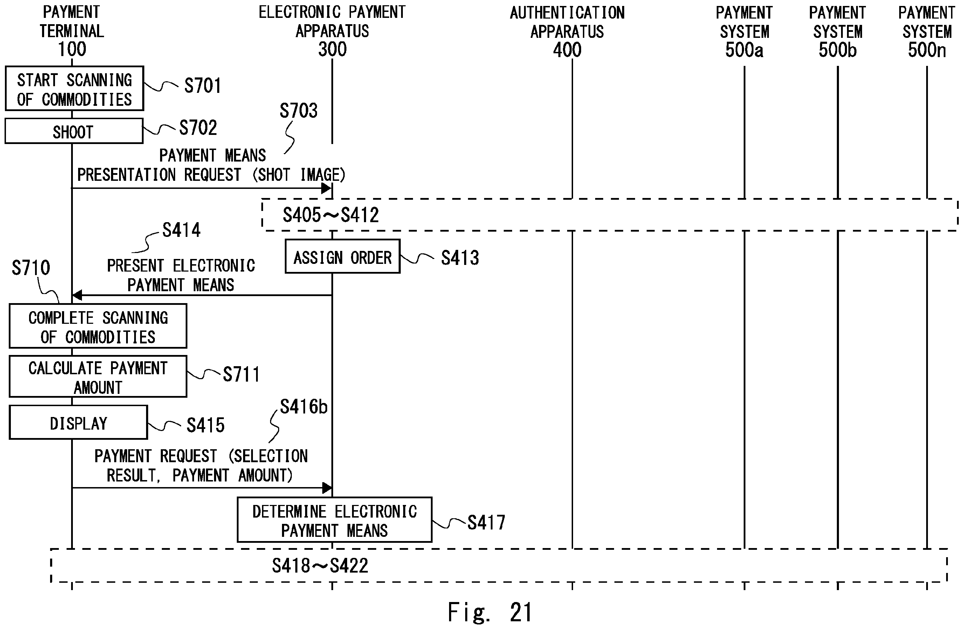

Fig. 21 is a sequence diagram illustrating another flow of the electronic payment processing according to the seventh example embodiment. As a difference from Fig. 19, described above, the payment terminal 100 completes scanning of all payment target commodities (S710) and calculates a payment amount of the scanned commodities (group) (S711) after electronic payment means is presented in step S414. Then, the payment terminal 100 displays a received payment means selection screen on the display unit 140 (S415). The payment terminal 100 performs step S416b, as described above. This also makes it possible to produce an effect in the seventh example embodiment.

### <Other Example Embodiments>

Although described as a configuration of hardware in the above-described example embodiments, the present disclosure is not limited to this. The present disclosure also makes it possible to implement any processing by causing a CPU to execute a computer program.

In the above-described example, the program is stored using various types of non-transitory computer-readable media, and can be supplied to a computer. The non-transitory computer-readable medium includes various types of tangible storage media. Examples of the non-transitory computer-readable medium include a magnetic recording medium (e.g., a flexible disk, a magnetic tape, or a hard disk drive), a magneto-optical recording medium (e.g., a magneto-optical disk), a CD-ROM (read only memory), a CD-R, a CD-R/W, a DVD (digital versatile disc), and a semiconductor memory (e.g., a mask ROM, a PROM (programmable ROM), an EPROM (erasable PROM), a flash ROM, and a RAM (random access memory)). The program may be supplied to a computer by various types of transitory computer-readable media. Examples of the transitory computer-readable medium include an electric signal, an optical signal, and an electromagnetic wave. The transitory computer-readable medium can supply the program to the computer via a wired communication path such as an electrical wire and an optical fiber or a wireless communication path.

The present disclosure is not limited to the above-described example embodiments, and can appropriately be changed without departing from the spirit of the invention. The present disclosure may be implemented by appropriately combining the example embodiments.

Some or all of the above-mentioned example embodiments can also be described as in the following supplementary notes, but are not limited thereto.

### (Supplementary Note A1)

An electronic payment apparatus comprising:
storage means for storing a user and authentication information in each of a plurality of electronic payment means in association with each other;
authentication control means for causing an authentication apparatus that stores face feature information of the user to perform face authentication for a shot image obtained by shooting the user at the time of payment;
collection means for collecting value-related information relating to a payment value possessed by the user in each of the electronic payment means using the authentication information associated with the user who has succeeded in the face authentication;
determination means for determining the electronic payment means as a payment target from among the plurality of electronic payment means based on the collected value-related information; and
execution instruction means for issuing an instruction to perform payment processing using the electronic payment means as the payment target.

### (Supplementary Note A2)

The electronic payment apparatus described in the supplementary note A1, wherein the determination means applies a predetermined order assignment criterion to the collected value-related information to assign an order to each of the electronic payment means, and determines the electronic payment means as the payment target depending on the order.

### (Supplementary Note A3)

The electronic payment apparatus described in the supplementary note A2, wherein the determination means
presents the plurality of electronic payment means to the user, respectively, according to the assigned orders,
receives selection by the user from among the presented electronic payment means, and
determines the electronic payment means selected by the user as the payment target.

### (Supplementary Note A4)

The electronic payment apparatus described in the supplementary note A3, wherein the determination means determines the electronic payment means assigned the highest order among the plurality of electronic payment means as the payment target when it has not received the selection by the user within a predetermined time period after presenting the electronic payment means to the user.

### (Supplementary Note A5)

The electronic payment apparatus described in the supplementary note A3 or A4, wherein the determination means presents the predetermined number of electronic payment means from the electronic payment means assigned the highest order among the plurality of electronic payment means, and presents the previously designated electronic payment means.

### (Supplementary Note A6)

The electronic payment apparatus described in the supplementary note A2, wherein the determination means determines the electronic payment means assigned the highest order among the plurality of electronic payment means as the payment target.

### (Supplementary Note A7)

The electronic payment apparatus described in any one of the supplementary notes A2 to A6, further comprising:
history registration means for registering a set of the collected value-related information and the determined electronic payment means as the payment target as history information in the storage means; and
learning means for learning an order assignment model that performs processing for respectively assigning orders to the plurality of electronic payment means upon receiving the value-related information using the history information as learning data,
wherein the determination means respectively assigns orders to the plurality of electronic payment means using the learned order assignment model as the order assignment criterion.

### (Supplementary Note A8)

The electronic payment apparatus described in any one of the supplementary notes A1 to A7, further comprising acquisition means for acquiring the shot image before completion of reading processing for all payment target commodities for the payment,
wherein the execution instruction means issues an instruction to perform payment processing using the electronic payment means as the payment target after completion of the reading processing for all the payment target commodities.

### (Supplementary Note A9)

The electronic payment apparatus described in any one of the supplementary notes A1 to A8, wherein the value-related information includes a balance of privilege information assigned to the user in each of the electronic payment means.

### (Supplementary Note A10)

The electronic payment apparatus described in any one of the supplementary notes A1 to A9, wherein the value-related information includes return-scheduled information scheduled to be returned to the user in each of the electronic payment means in current payment.

### (Supplementary Note A 11)

The electronic payment apparatus described in the supplementary note A10, wherein the return-scheduled information is information corresponding to a usage record of the user in each of electronic payment means.

### (Supplementary Note B 1)

An electronic payment apparatus comprising:
storage means for storing a user, face authentication information of the user, and authentication information in each of a plurality of electronic payment means in association with one another;
authentication control means for performing face authentication using the face feature information for a shot image obtained by shooting the user at the time of payment;
collection means for collecting value-related information relating to a payment value possessed by the user in each of the electronic payment means using the authentication information associated with the user who has succeeded in the face authentication;
determination means for determining the electronic payment means as a payment target from among the plurality of electronic payment means based on the collected value-related information; and
execution instruction means for issuing an instruction to perform payment processing using the electronic payment means as the payment target.

### (Supplementary Note B2)

The electronic payment apparatus described in the supplementary note B1, wherein the determination means applies a predetermined order assignment criterion to the collected value-related information to assign an order to each of the electronic payment means, and determines the electronic payment means as the payment target depending on the order.

### (Supplementary Note C1)

An electronic payment system comprising
an authentication apparatus that stores face feature information of a user; and
an electronic payment apparatus,
wherein the electronic payment apparatus comprises:
   storage means for storing the user and authentication information in each of a plurality of electronic payment means in association with each other;
   authentication control means for causing the authentication apparatus to perform face authentication for a shot image obtained by shooting the user at the time of payment;
   collection means for collecting value-related information relating to a payment value possessed by the user in each of the electronic payment means using the authentication information associated with the user who has succeeded in the face authentication;
   determination means for determining the electronic payment means as a payment target from among the plurality of electronic payment means based on the collected value-related information; and
   execution instruction means for issuing an instruction to perform payment processing using the electronic payment means as the payment target.

### (Supplementary Note C2)

The electronic payment system described in the supplementary note C1, wherein the determination means applies a predetermined order assignment criterion to the collected value-related information to assign an order to each of the electronic payment means, and determines the electronic payment means as the payment target depending on the order.

### (Supplementary Note D1)

An electronic payment method, wherein
a computer comprising storage means for storing a user and authentication information in each of a plurality of electronic payment means in association with each other
causes an authentication apparatus that stores face feature information of the user to perform face authentication for a shot image obtained by shooting the user at the time of payment;
collects value-related information relating to a payment value possessed by the user in each of the electronic payment means using the authentication information associated with the user who has succeeded in the face authentication;
determines the electronic payment means as a payment target from among the plurality of electronic payment means based on the collected value-related information; and
issues an instruction to perform payment processing using the electronic payment means as the payment target.

### (Supplementary Note E1)

An electronic payment method, wherein
a computer comprising storage means for storing a user, face feature information of the user, and authentication information in each of a plurality of electronic payment means in association with one another
performs face authentication using the face feature information for a shot image obtained by shooting the user at the time of payment;
collects value-related information relating to a payment value possessed by the user in each of the electronic payment means using the authentication information associated with the user who has succeeded in the face authentication;
determines the electronic payment means as a payment target from among the plurality of electronic payment means based on the collected value-related information; and
issues an instruction to perform payment processing using the electronic payment means as the payment target.

### (Supplementary Note F1)

A non-transitory computer-readable medium storing an electronic payment program for causing a computer comprising storage means for storing a user and authentication information in each of a plurality of electronic payment means in association with each other to perform:
authentication control processing for causing an authentication apparatus that stores face feature information of the user to perform face authentication for a shot image obtained by shooting the user at the time of payment;
collection processing for collecting value-related information relating to a payment value possessed by the user in each of the electronic payment means using the authentication information associated with the user who has succeeded in the face authentication;
determination processing for determining the electronic payment means as a payment target from among the plurality of electronic payment means based on the collected value-related information; and
execution instruction processing for issuing an instruction to perform payment processing using the electronic payment means as the payment target.

### (Supplementary Note G1)

A non-transitory computer-readable medium storing an electronic payment program for causing a computer comprising storage means for storing a user, face feature information of the user, and authentication information in each of a plurality of electronic payment means in association with one another to perform:
authentication control processing for performing face authentication using the face feature information for a shot image obtained by shooting the user at the time of payment;
collection processing for collecting value-related information relating to a payment value possessed by the user in each of the electronic payment means using the authentication information associated with the user who has succeeded in the face authentication;
determination processing for determining the electronic payment means as a payment target from among the plurality of electronic payment means based on the collected value-related information; and
execution instruction processing for issuing an instruction to perform payment processing using the electronic payment means as the payment target.

Although the present invention has been described with reference to the example embodiments (and examples), the present invention is not limited to the above-described example embodiments (and examples). A configuration and details of the present invention can be subjected to various changes that can be understood by those skilled in the art within the scope of the present invention.

### Reference Signs List

1 ELECTRONIC PAYMENT APPARATUS
1a ELECTRONIC PAYMENT APPARATUS
11 STORAGE UNIT
110a USER
110b FACE FEATURE INFORMATION
111 AUTHENTICATION INFORMATION
11n AUTHENTICATION INFORMATION
12 AUTHENTICATION CONTROL UNIT
12a AUTHENTICATION CONTROL UNIT
13 COLLECTION UNIT
14 DETERMINATION UNIT
15 EXECUTION INSTRUCTION UNIT
1000 ELECTRONIC PAYMENT SYSTEM
100 PAYMENT TERMINAL
110 CAMERA
120 STORAGE UNIT
130 COMMUNICATION UNIT
140 DISPLAY UNIT
150 CONTROL UNIT
151 SHOOTING UNIT
153 COMMODITY READING UNIT
154 PAYMENT REQUEST UNIT
200 USER TERMINAL
210 CAMERA
220 STORAGE UNIT
230 COMMUNICATION UNIT
240 DISPLAY UNIT
250 CONTROL UNIT
251 SHOOTING UNIT
252 REGISTRATION UNIT
253 COMMODITY READING UNIT
254 PAYMENT REQUEST UNIT
300 ELECTRONIC PAYMENT APPARATUS
300a ELECTRONIC PAYMENT APPARATUS
310 STORAGE UNIT
311 PROGRAM
312 PAYMENT MEANS MANAGEMENT INFORMATION
3120 USER ID
3121a ELECTRONIC PAYMENT MEANS ID
3121b ELECTRONIC PAYMENT MEANS ID
3121n ELECTRONIC PAYMENT MEANS ID
3122a AUTHENTICATION INFORMATION
3122b AUTHENTICATION INFORMATION
3122n AUTHENTICATION INFORMATION
313 ORDER ASSIGNMENT RULE
313a ORDER ASSIGNMENT MODEL
314 HISTORY INFORMATION
3141 VALUE-RELATED INFORMATION
3142 ELECTRONIC PAYMENT MEANS ID
320 CONTROL UNIT
321 ACQUISITION UNIT
322 AUTHENTICATION CONTROL UNIT
323 COLLECTION UNIT
324 DETERMINATION UNIT
324a DETERMINATION UNIT
325 EXECUTION INSTRUCTION UNIT
326 HISTORY REGISTRATION UNIT
327 LEARNING UNIT
330 MEMORY
340 COMMUNICATION UNIT
400 AUTHENTICATION APPARATUS
410 FACE INFORMATION DB
411 USER ID
412 FACE FEATURE INFORMATION
420 FACE DETECTION UNIT
430 FEATURE POINT EXTRACTION UNIT
440 REGISTRATION UNIT
450 AUTHENTICATION UNIT
500a PAYMENT SYSTEM
501 AUTHENTICATION INFORMATION
502 BALANCE
503 POINT BALANCE
504 RETURN INFORMATION
500b PAYMENT SYSTEM
500n PAYMENT SYSTEM
600 PAYMENT MEANS SELECTION SCREEN
610 SORTING RESULT DISPLAY SELECTION REGION
620 SORTING RESULT DISPLAY SELECTION REGION
630 SORTING RESULT DISPLAY SELECTION REGION
640 ADVERTISEMENT DISPLAY SELECTION REGION
N NETWORK
U USER

## Claims

1. An electronic payment apparatus comprising:
storage means for storing a user and authentication information in each of a plurality of electronic payment means in association with each other;
authentication control means for causing an authentication apparatus that stores face feature information of the user to perform face authentication for a shot image obtained by shooting the user at the time of payment;
collection means for collecting value-related information relating to a payment value possessed by the user in each of the electronic payment means using the authentication information associated with the user who has succeeded in the face authentication;
determination means for determining the electronic payment means as a payment target from among the plurality of electronic payment means based on the collected value-related information; and
execution instruction means for issuing an instruction to perform payment processing using the electronic payment means as the payment target.

2. The electronic payment apparatus according to claim 1, wherein the determination means applies a predetermined order assignment criterion to the collected value-related information to assign an order to each of the electronic payment means, and determines the electronic payment means as the payment target depending on the order.

3. The electronic payment apparatus according to claim 2, wherein the determination means
presents the plurality of electronic payment means to the user, respectively, according to the assigned orders,
receives selection by the user from among the presented electronic payment means, and
determines the electronic payment means selected by the user as the determination target.

4. The electronic payment apparatus according to claim 3, wherein the determination means determines the electronic payment means assigned the highest order among the plurality of electronic payment means as the determination target when it has not received the selection by the user within a predetermined time period after presenting the electronic payment means to the user.

5. The electronic payment apparatus according to claim 3 or 4, wherein the determination means presents the predetermined number of electronic payment means from the electronic payment means assigned the highest order among the plurality of electronic payment means, and presents the previously designated electronic payment means.

6. The electronic payment apparatus according to claim 2, wherein the determination means determines the electronic payment means assigned the highest order among the plurality of electronic payment means as the payment target.

7. The electronic payment apparatus according to any one of claims 2 to 6, further comprising:
history registration means for registering a set of the collected value-related information and the determined electronic payment means as the payment target as history information in the storage means; and
learning means for learning an order assignment model that performs processing for respectively assigning orders to the plurality of electronic payment means upon receiving the value-related information using the history information as learning data,
wherein the determination means respectively assigns the orders to the plurality of electronic payment means using the learned order assignment model as the order assignment criterion.

8. The electronic payment apparatus according to any one of claims 1 to 7, further comprising acquisition means for acquiring the shot image before completion of reading processing for all payment target commodities for the payment,
wherein the execution instruction means issues an instruction to perform payment processing using the electronic payment means as the payment target after completion of the reading processing for all the payment target commodities.

9. The electronic payment apparatus according to any one of claims 1 to 8, wherein the value-related information includes a balance of privilege information assigned to the user in each of the electronic payment means.

10. The electronic payment apparatus according to any one of claims 1 to 9, wherein the value-related information includes return-scheduled information scheduled to be returned to the user in each of the electronic payment means in current payment.

11. The electronic payment apparatus according to claim 10, wherein the return-scheduled information is information corresponding to a usage record of the user in each of the electronic payment means.

12. An electronic payment apparatus comprising:
storage means for storing a user, face feature information of the user, and authentication information in each of a plurality of electronic payment means in association with one another;
authentication control means for performing face authentication using the face feature information for a shot image obtained by shooting the user at the time of payment;
collection means for collecting value-related information relating to a payment value possessed by the user in each of the electronic payment means using the authentication information associated with the user who has succeeded in the face authentication;
determination means for determining the electronic payment means as a payment target from among the plurality of electronic payment means based on the collected value-related information; and
execution instruction means for issuing an instruction to perform payment processing using the electronic payment means as the payment target.

13. The electronic payment apparatus according to claim 12, wherein the determination means applies a predetermined order assignment criterion to the collected value-related information to assign an order to each of the electronic payment means, and determines the electronic payment means as the payment target depending on the order.

14. An electronic payment system comprising:
an authentication apparatus that stores face feature information of a user; and
an electronic payment apparatus,
wherein the electronic payment apparatus comprises:
storage means for storing the user and authentication information in each of a plurality of electronic payment means in association with each other;
authentication control means for causing the authentication apparatus to perform face authentication for a shot image obtained by shooting the user at the time of payment;
collection means for collecting value-related information relating to a payment value possessed by the user in each of the electronic payment means using the authentication information associated with the user who has succeeded in the face authentication;
determination means for determining the electronic payment means as a payment target from among the plurality of electronic payment means based on the collected value-related information; and
execution instruction means for issuing an instruction to perform payment processing using the electronic payment means as the payment target.

15. The electronic payment system according to claim 14, wherein the determination means applies a predetermined order assignment criterion to the collected value-related information to assign an order to each of the electronic payment means, and determines the electronic payment means as the payment target depending on the order.

16. An electronic payment method performed by a computer, wherein
the computer comprising storage means for storing a user and authentication information in each of a plurality of electronic payment means in association with each other, the electronic payment method comprising:
causing an authentication apparatus that stores face feature information of the user to perform face authentication for a shot image obtained by shooting the user at the time of payment;
collecting value-related information relating to a payment value possessed by the user in each of the electronic payment means using the authentication information associated with the user who has succeeded in the face authentication;
determining the electronic payment means as a payment target from among the plurality of electronic payment means based on the collected value-related information; and
issuing an instruction to perform payment processing using the electronic payment means as the payment target.

17. An electronic payment method performed by a computer, wherein
the computer comprising storage means for storing a user, face feature information of the user, and authentication information in each of a plurality of electronic payment means in association with one another, the electronic payment method comprising:
performing face authentication using the face feature information for a shot image obtained by shooting the user at the time of payment;
collecting value-related information relating to a payment value possessed by the user in each of the electronic payment means using the authentication information associated with the user who has succeeded in the face authentication;
determining the electronic payment means as a payment target from among the plurality of electronic payment means based on the collected value-related information; and
issuing an instruction to perform payment processing using the electronic payment means as the payment target.

18. A non-transitory computer-readable medium storing an electronic payment program for causing a computer comprising storage means for storing a user and authentication information in each of a plurality of electronic payment means in association with each other to execute:
authentication control processing for causing an authentication apparatus that stores face feature information of the user to perform face authentication for a shot image obtained by shooting the user at the time of payment;
collection processing for collecting value-related information relating to a payment value possessed by the user in each of the electronic payment means using the authentication information associated with the user who has succeeded in the face authentication;
determination processing for determining the electronic payment means as a payment target from among the plurality of electronic payment means based on the collected value-related information; and
execution instruction processing for issuing an instruction to perform payment processing using the electronic payment means as the payment target.

19. A non-transitory computer-readable medium storing an electronic payment program for causing a computer comprising storage means for storing a user, face feature information of the user, and authentication information in each of a plurality of electronic payment means in association with one another to execute:
authentication control processing for performing face authentication using the face feature information for a shot image obtained by shooting the user at the time of payment;
collection processing for collecting value-related information relating to a payment value possessed by the user in each of the electronic payment means using the authentication information associated with the user who has succeeded in the face authentication;
determination processing for determining the electronic payment means as a payment target from among the plurality of electronic payment means based on the collected value-related information; and
execution instruction processing for issuing an instruction to perform payment processing using the electronic payment means as the payment target.
